# EUROPEAN PATENT SPECIFICATION

(11) **EP 4 261 069 B1**
(45) Date of publication and mention of the grant of the patent: **02.12.2026**
(21) Application number: 22196461.2
(22) Date of filing: 20.09.2022
(51) Int. Cl.: B60K 35/22, B60K 35/53, B60R 11/02, G06F 1/16

(54) **DISPLAYING DEVICE AND ROTATING ASSEMBLY**
ANZEIGEVORRICHTUNG UND DREHANORDNUNG
DISPOSITIF D'AFFICHAGE ET ENSEMBLE ROTATIF

(30) Priority: 12.04.2022 CN 202220840040 U
(43) Date of publication of application: 18.10.2023
(73) Proprietor: Futaijing Precision Electronics (Yantai) Co., Ltd., Beijing (CN); Hon Hai Precision Industry Co., Ltd., New Taipei 236 (TW)
(72) Inventor: CHANG, YU-SHENG, 236 New Taipei (TW); WEN, CHI-CHENG, 236 New Taipei (TW); LEE, CHIH-CHENG, 236 New Taipei (TW); HUANG, WEN-BIN, 236 New Taipei (TW); WU, TSUNG-HSIN, 236 New Taipei (TW); CHENG, YU-CHIH, 236 New Taipei (TW); LI, HSIU-FU, 236 New Taipei (TW)
(74) Representative: Zaboliene, Reda

(56) References cited:
- EP-A1- 3 750 752
- CN-A- 110 154 923
- US-A1- 2011 075 335
- US-A1- 2017 174 146
- US-A1- 2022 003 355

## Description

### FIELD

The subject matter herein relates to technical field of automobile control, especially relates to a displaying device and a rotating assembly.

### BACKGROUND

With the continuous improvement of the entertainment and intelligent functions of modem cars, on-board multimedia equipment is becoming more and more popular. Customers need more flexibility in the vehicle mounted central control panel. Most of existing central control panels are directly fixed to beam of instrument panel in form of a horizontal screen or a vertical screen and the orientation cannot be changed.

The fixed horizontal screen or vertical screen cannot meet the user's need to rotate the screen arbitrarily. A user needs the vehicle central control screen to be able to switch between the horizontal screen and vertical screen.

CN 110154923 A (BYD CO LTD, published on August 23, 2019) disclosed a rotating mechanism and vehicle for display terminal, the rotating mechanism includes: installation unit, clutch unit and driving unit, and the installation unit is for installing display terminal. The clutch unit includes clutch component, and the clutch component includes a first joint portion and a second joint portion worked in coordination. The first joint portion is connect with the installation unit. The driving unit includes an output section of exportable torque, and the output section and second joint portion are detachably connected and can transmit torque, and first joint portion and the second joint portion are often mutually locked.

US 2022003355 A1 (HSU YU-TSUN [TW], published on January 6, 2022) disclosed a quick-release structure for a display, comprising a stand, a first buckle ring and a second buckle ring. The stand includes a top base, and the top base is connected with a side of a top end of a support frame, where the top base has a front cover and a rear cover that cover oppositely each other. A clamping space is provided between the front cover and the rear cover, and the front cover has an outer periphery having a plurality of notches. The first buckle ring, accommodated and limited in the clamping space in a manner that the first buckle ring can be restored after being rotated, where the first buckle ring is provided with a pushing portion passed through the first limiting hole to push the first buckle ring to be rotated.

US 2017174146 A1 (KIPP BRIAN L [US] ET AL, published on June 22, 2017) disclosed a vehicle seat may include a seatback, a cover, a housing, arms and a plate. The cover is connected to the seatback at a hinge and is rotatable relative to the seatback between first and second positions to open and close a recess formed in a rearward-facing surface of the seatback. The housing is movably attached to the cover. The arms are movably connected to the housing. Each arm may include a body, a gripping flange extending from an end of the body, and a protrusion extending from the body. The plate is rotatably mounted to the housing and includes a plurality of grooves. Each groove slidably receives a corresponding one of the protrusions such that rotation of the plate in a first direction causes movement of the arms toward each other and rotation of the plate in a second direction causes movement of the arms away from each other.

### SUMMARY

The present invention provides a displaying device and a rotating assembly, to solve the problem of switching the horizontal screen or vertical screen flexibly.

The displaying device includes a displaying assembly and a transmitting assembly connected to the displaying assembly. The displaying assembly includes a displaying panel and a first clamping structure connected to the displaying panel. The first clamping structure includes tenon structures and fixing structures, the tenon structures are positioned between the fixing structures. The transmitting assembly includes a second clamping structure and a connecting structure, the second clamping structure is coupled to the first clamping structure, the second clamping structure comprises clamping joints, the clamping joints are coupled to the tenon structures, a receiving hole is defined on the first clamping structure, the displaying assembly includes a first signal interface, the first signal interface is positioned in the receiving hole; a through hole is defined on the second clamping structure, the through hole is detachable and communicates with the receiving hole; the tenon structures includes a first tenon, a second tenon, and a third tenon, the first tenon includes a symmetrical bending part, and the second tenon and the third tenon are around the receiving hole, and the second tenon is spaced with a part of the symmetrical bending part, the third tenon is spaced with another part of the symmetrical bending part; the clamping joints and the tenon structures are staggered, and the clamping joints can be inserted in gaps between the first tenon, the second tenon, and the third tenon; fixing grooves are defined on the second clamping structure, profile of the fixing grooves are matched with the fixing structures, and an end of the connecting structure is fixedly connected to the second clamping structure.

The rotating assembly includes a first clamping structure for connecting a displaying panel, a transmitting assembly, and a driving assembly. The first clamping structure includes tenon structures and fixing structures, the tenon structures are positioned between the fixing structures. The transmitting assembly includes a second clamping structure and a connecting structure, the second clamping structure is coupled to the first clamping structure, the clamping structure comprises a clamping joint, the clamping joint is coupled to the tenon structure, and fixing grooves are defined on the second clamping structure. Number and profile of the fixing grooves are matched with the fixing structures, an end of the connecting structure is fixedly connected to the second clamping structure. The driving assembly includes a driving member, an output shaft of the driving member is connected to the connecting structure.

### BRIEF DESCRIPTION OF THE DRAWINGS

Many aspects of the invention can be better understood with reference to the following drawings. The components in the drawings are not necessarily drawn to scale, the emphasis instead being placed upon clearly illustrating the principles of the invention. Moreover, in the drawings, like reference numerals designate corresponding parts throughout the several views.
FIG. 1 is a schematic view of a displaying assembly of a displaying device in an embodiment of the present invention.
FIG. 2 is a schematic view of a transmission assembly of the displaying device in an embodiment of the present invention.
FIG. 3 is an exploded view of the displaying device in an embodiment of the present invention.
FIG. 4 is a cross section view of the transmission assembly of the displaying device in an embodiment of the present invention.

Description of main components or elements:
Displaying device 1;
Displaying assembly 11;
First clamping structure 111;
Tenon structures 112;
First tenon 1121;
Second tenon 1122;
Third tenon 1123;
Bending part 1124;
Fixing structure 113;
First connecting hole 114;
Receiving hole 115;
First signal interface 116;
Connecting member 117;
Transmitting assembly 12;
Second clamping structure 121;
Connecting structure 122;
Clamping joint 123;
Fixing groove 124;
Second connecting hole 125;
Through hole 126;
Side wall 127;
Second signal interface 128;
Bearing 129;
Driving assembly 13;
Driving member 131;
Housing 132;
Opening 133;
Cavity 134;
Rotating axis 14.

### DETAILED DESCRIPTION

In order to make the above-mentioned objects, features, and advantages of the present invention more obvious, a description of specific embodiments of the present invention will be described with reference to the accompanying drawings. The present invention can be implemented in many ways different from those described herein, and those skilled in the art can make similar improvements without violating the contents of the present invention.

Several definitions that apply throughout this invention will now be presented.

Unless otherwise defined, all technical and scientific terms used herein have the same meaning as commonly understood by one skilled in the art.

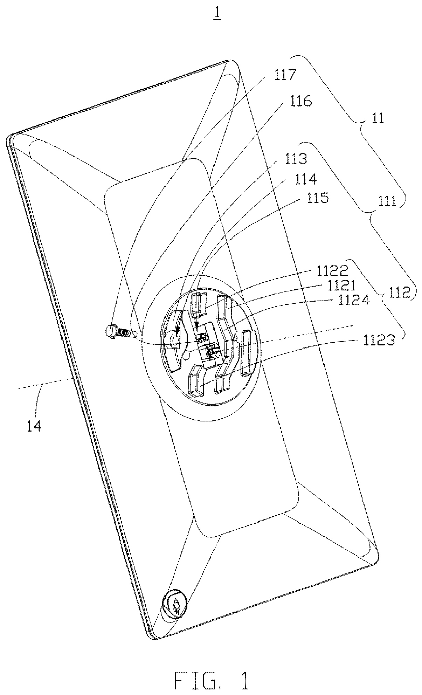

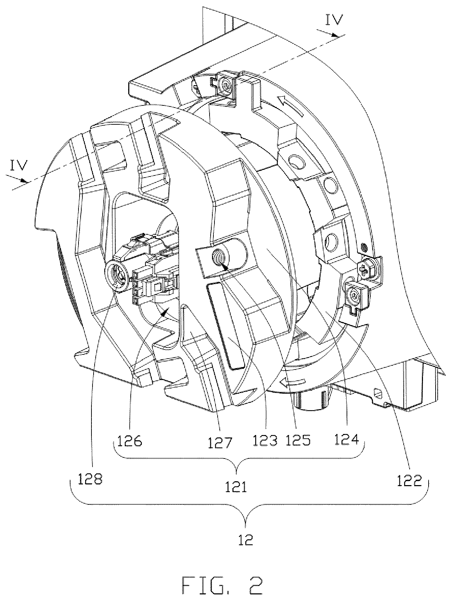

Referring to FIG. 1 and FIG. 2, a displaying device 1 as shown can rotate around a rotating axis 14 automatically, and the displaying device 1 includes a displaying assembly 11 and a transmission assembly 12. FIG. 1 is a schematic view of the displaying assembly 11 of a displaying device 1. FIG. 2 is a schematic view of the transmission assembly 12 of the display device 1. The displaying assembly 11 is coupled to the transmission assembly 12.

The displaying assembly 11 includes a displaying panel and a first clamping structure 111 connected to the displaying panel. The first clamping structure 111 includes tenon structures 112 and fixing structures 113. An extending direction of the tenon structures 112 and the fixing structures 113 is parallel to the rotating axis 14. The tenon structures 112 are positioned between the fixing structures 113. There are two fixing structures 113. In other embodiment, quantity of the fixing structures 113 may be one, or more than two. The transmission assembly 12 includes a second clamping structure 121 and a connecting structure 122. The second clamping structure 121 is detachably coupled to the first clamping structure 111. The second clamping structure 121 includes clamping joints 123. The clamping joints 123 and the tenon structures 112 are staggered, and the clamping joints 123 can be inserted in gaps between the tenon structures 112 when the clamping joints 123 and the tenon structures 112 are coupled. Fixing grooves 124 corresponding to the fixing structures 113 are defined on the second clamping structure 121. The fixing grooves 124 are matched with the fixing structures 113. An end of the connecting structure 122 is fixedly connected to the second clamping structure 121.

In an embodiment, a first connecting hole 114 is defined on the first clamping structure 111. A second connecting hole 125 is defined on the second clamping structure 121. The first connecting hole 114 is detachable and communicates with the second connecting hole 125. A connecting member 117 is positioned in the first connecting hole 114 and the second connecting hole 125. The first clamping structure 111 is fixed to the second clamping structure 121 through the connecting member 117.

Furthermore, when the second clamping structure 121 is connected to the first clamping structure 111, the clamping joints 123 are coupled to the tenon structures 112, and the fixing structures 113 are positioned in the fixing grooves 124. The first connecting hole 114 can communicate with the second connecting hole 125. When the connecting member 117 is inserted in the first connecting hole 114 and the second connecting hole 125, the first clamping structure 111 is fixed to the second clamping structure 121. In an embodiment, the first connecting hole 114 is defined at a side of the fixing structure 113. The second connecting hole 125 is defined at a side of the clamping joint 123. An axis of the second connecting hole 125 is coaxial with an axis of the first connecting hole 114, and such axis is perpendicular to the rotating axis 14. Therefore, the first clamping structure 111 and the second clamping structure 121 may be fixedly connected in a direction perpendicular to the rotating axis 14 through the connecting member 117. The connecting member 117 may be a screw or a pin. The second connecting hole 125 may be a screw hole or a cylindrical hole.

The connecting structure 122 is fixedly connected to the second clamping structure 121. When a rotation force is applied to the connecting structure 122, the connecting portion 122 can transmit the rotational torque to the clamping joint 123. Due to the fixed connection between the second clamping structure 121 and the first clamping structure 111, the clamping joints 123 transmit the rotational torque to the tenon structures 112 and the fixing structures 113, and the displaying assembly 11 can be freely rotated to horizontal or vertical orientations.

In an embodiment, the displaying panel may be one of central control screen, displaying screen, and navigator. The first clamping structure 111 is positioned at a back plate of the central control screen. The tenon structures 112 and the fixing structures 113 of the first clamping structure 111 are spaced apart and positioned at a center of the central control screen.

The transmitting assembly 12 may be one of a rotating body such as a cylinder, a disk, and a connecting shaft. A central axis of the transmitting assembly 12 is coaxial with the rotating axis 14.

In an embodiment, a receiving hole 115 is defined on the first clamping structure 111, and receiving hole 115 is located between the tenon structures 112. The displaying assembly 11 further comprises a first signal interface 116. The first signal interface 116 is positioned in the receiving hole 115. The first signal interface 116 is configured to provide signals to the central control screen.

In an embodiment, the tenon structures 112 includes a first tenon 1121, a second tenon 1122, and a third tenon 1123, which are arranged around the receiving hole 115. The first tenon 1121 includes a symmetrical bending part 1124. The second tenon 1122 and the third tenon 1123 are arranged symmetrically around the receiving hole 115.

Furthermore, the first signal interface 116 is coaxial with the rotating axis 14, so that the first signal interface 116 rotates coaxially with the rotating axis 14. When the first clamping structure 111 and the second clamping structure 121 are connected, the clamping joints 123 are inserted in gaps between the first tenon 1121, the second tenon 1122, and the third tenon 1123, thus connecting strength between the first clamping structure 111 and the second clamping structure 121 can be improved. The first tenon 1121, the second tenon 1122, and the third tenon 1123 balance the distribution of the rotating torque, thereby enabling smooth rotation of the first signal interface 116.

In an embodiment, the receiving hole 115 is arranged at the center position of the back plate of the central control screen. The receiving hole 115 may be a blind hole, and the signal interface 116 is installed in the receiving hole 115. An axis of the receiving hole 115 is coaxial with the rotating axis 14. The receiving hole 115 is arranged between the tenon structures 112, and the tenon structures 112 function to fix the position and angle of the first signal interface 116, so that connection of the first signal interface 116 is not affected by the rotation of the display assembly 11, so that the first signal interface 116 can continuously and stably provide signals.

In an embodiment, a through hole 126 corresponding to the receiving hole 115 is defined on the second clamping structure 121. The through hole 126 is detachable and communicates with the receiving hole 115.

In an embodiment, the second clamping structure includes side walls 127, the through hole 126 is formed between the side walls 127. The side walls 127 abut against sides of the tenon structures 112 when the through hole 126 is communicating with the receiving hole 115.

In an embodiment, the transmitting assembly 12 further includes a second signal interface 128. The second signal interface 128 is positioned in the through hole 126, and the second signal interface 128 is electrically connected to the first signal interface 116.

The transmitting assembly 12 provides signals to the display assembly 11. The through hole 126 communicates with the receiving hole 115 to provide a cavity which accommodates the first signal interface 116 connected to the second signal interface 128. The side walls 127 abuts against sides of the tenon structures 112 when the through hole 126 is communicating with the receiving hole 115, so that the first signal interface 116 and the second signal interface 128 can be stably and firmly connected.

Shape of the through hole 126 fits with shape of the receiving hole 115. The side walls 127 are ribs extended along the direction of the rotating axis 14, and the side walls 127 are integrally connected with the clamping joints 123. When the first clamping structure 111 and the second clamping structure 121 are connected, the through hole 126 communicate with the accommodating hole 115, the first signal interface 116 is electrically connected to the second signal interface 128, and the side walls 127 abuts against sides of the tenon structures 112.

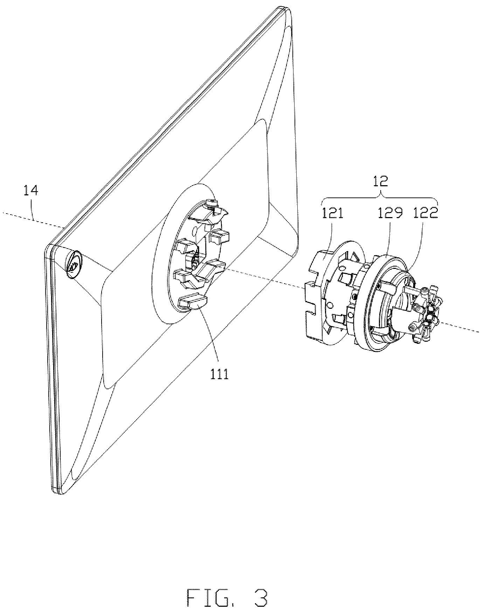

Referring to FIG. 3, the transmitting assembly 12 further includes a bearing 129. The bearing 129 is positioned at an end of the connecting structure 122 away from the second clamping structure 121, and the bearing 129 is rotatably connected with the connecting structure 122.

Furthermore, an inner surface of the bearing 129 is fixedly connected with an outer surface of the connecting structure 122, so that the connecting structure 122 can be rotated relative to an outer surface of the bearing 129. The connecting structure 122 drives the second clamping structure 121 to rotate coaxially, and the second clamping structure 121 is fixedly connected with the first clamping structure 111, thereby allowing coaxial rotation of the first clamping structure 111 and the bearing 129.

In an embodiment, the outer surface of the connecting structure 122 may be provided with a snap-fit structure such as a groove or a step, for placing and holding the bearing 129. An axis of the bearing 129 is coaxial with the rotating axis 14. The second clamping structure 121 is coupled with the first clamping structure 111, so that the first clamping structure 111, the second clamping structure 121, and the bearing 129 can rotate coaxially, so that the transmitting assembly 12 can drive the display assembly 11 to rotate smoothly, and the displaying device 1 can be switched between landscape and portrait screens smoothly.

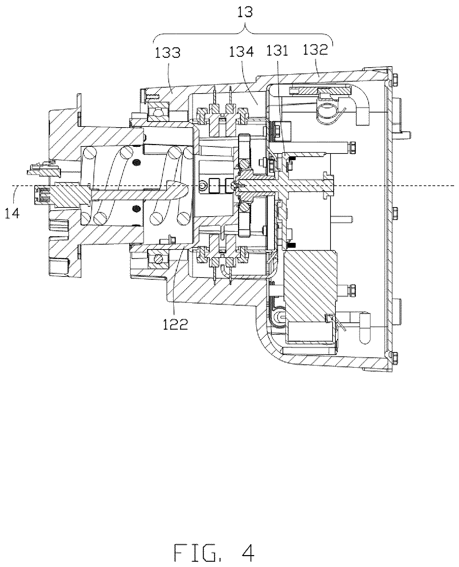

Referring to FIG. 4, the displaying device 1 further includes a driving assembly 13. The driving assembly 13 includes a driving member 131, an output shaft of the driving member 131 is connected to the connecting structure 122.

In an embodiment, the driving assembly 13 further includes a housing 132, a cavity 134 with an opening 133 is defined in the housing 132. The connecting structure 122 is partially positioned in the cavity 134, and the connecting structure 122 is extended out of the cavity 134 from the opening 133. The connecting structure 122 is rotatably connected with the housing 132.

The output shaft of the driving member 131 is coaxial with the rotating axis 14. The output shaft of the driving member 131 drives the connecting structure 122 to rotate, and the connecting structure 122 and the output shaft of the driving member 131 rotate coaxially. A central axis of the opening 133 is coaxial with the output shaft of the driving member 131, and an inner surface of the opening 133 constrains rotation of the extension 122 around the rotating axis 14, thereby enabling the output shaft of the driving member 131 to drive the connecting structure 122 to rotate around the rotation axis 14 stably. The connecting structure 122 drives the second clamping structure 121 to rotate coaxially, the second clamping structure 121 is fixedly connected with the first clamping structure 111, the first clamping structure 111 can be rotated accordingly, thereby the driving assembly 13 can drive the display assembly 11 to rotate smoothly through the transmitting assembly 12.

In this embodiment, the driving member 131 may be a power element such as a motor or an electric motor, and the driving member 131 can provide rotational torque. The opening 133 may be a circular opening, and a sidewall of the circular opening 133 extends toward the second clamping structure 121. The central axis of the opening 133 is coaxial with the output shaft of the driving member 131.

Referring to FIG. 1 and FIG. 4, a rotating assembly is further disclosed in the present invention. The rotating assembly includes the first clamping structure 111, the transmitting assembly 12, and the driving assembly 13. The first clamping structure 111 is configure to connect the displaying panel and the transmitting assembly 12. Detailed structures of the first clamping structure 111, the transmitting assembly 12, and the driving assembly 13 are as described above, and are not repeated.

Even though information and advantages of the present embodiments have been set forth in the foregoing description, together with details of the structures and functions of the present embodiments, the invention is illustrative only. Changes may be made in detail, especially in matters of shape, size, and arrangement of parts within the principles of the present embodiments to the full extent indicated by the plain meaning of the terms in which the appended claims are expressed.

## Claims

1. A displaying device (1) comprising:
a displaying assembly (11) comprising a displaying panel and a first clamping structure (111) connected to the displaying panel, wherein the first clamping structure (111) comprises tenon structures (112) and fixing structures (113), the tenon structures (112) are positioned between the fixing structures (113);
a transmitting assembly (12) comprising a second clamping structure (121) and a connecting structure (122), wherein the second clamping structure (121) is coupled to the first clamping structure (111), the second clamping structure (121) comprises clamping joints (123), the clamping joints (123) are coupled to the tenon structures (112),
**characterized in that**, a receiving hole (115) is defined on the first clamping structure (111), the displaying assembly (11) comprises a first signal interface (116) positioned in the receiving hole (115);
a through hole (126) is defined on the second clamping structure (121), the through hole (126) is detachable and communicates with the receiving hole (115);
the tenon structures (112) comprise
a first tenon (1121), a second tenon (1122), and a third tenon (1123), the first tenon (1121) comprises a symmetrical bending part (1124), and the second tenon (1122) and the third tenon (1123) are around the receiving hole (115), and the second tenon (1122) is spaced with a part of the symmetrical bending part (1124), the third tenon (1123) is spaced with another part of the symmetrical bending part (1124); the clamping joints (123) and the tenon structures (112) are staggered, and the clamping joints (123) can be inserted in gaps between the first tenon (1121), the second tenon (1122), and the third tenon (1123); fixing grooves (124) are defined on the second clamping structure (121), profiles of the fixing grooves (124) are matched with the fixing structures (113), an end of the connecting structure (122) is fixedly connected to the second clamping structure (121).

2. The displaying device (1) of claim 1, wherein a first connecting hole (114) is defined on the first clamping structure (111), a second connecting hole (125) is defined on the second clamping structure (121), the first connecting hole (114) is detachable and communicates with the second connecting hole (125), a connecting member (117) is positioned in the first connecting hole (114) and the second connecting hole (125), the first clamping structure (111) is fixed to the second clamping structure (121) through the connecting member (117).

3. The displaying device (1) of claim 1, wherein the second clamping structure (121) comprises side walls (127), the through hole (126) is formed between the side walls (127), the side walls (127) abuts against the tenon structures (112) when the through hole (126) is communicated with the receiving hole (115).

4. The displaying device (1) of claim 3, wherein the transmitting assembly (12) comprises a second signal interface (128), the second signal interface (128) is positioned in the through hole (126), and the second signal interface (128) is connected to the first signal interface (116).

5. The displaying device (1) of claim 1, wherein the transmitting assembly (12) comprises a bearing (129), the bearing (129) is positioned at an end of the connecting structure (122) away from the second clamping structure (121), the bearing is rotatably connected with the connecting structure (122).

6. The displaying device (1) of claim 1, wherein the displaying device (1) comprises a driving assembly (13), the driving assembly (13) comprises a driving member (131), an output shaft of the driving member (13) is connected to the connecting structure (122).

7. The displaying device (1) of claim 6, wherein the driving assembly (13) comprises a housing (132), a cavity (134) with an opening (133) defined in the housing (132), the connecting structure (122) is partially positioned in the cavity (134), and the connecting structure (122) extends out of the cavity (134) from the opening (133), the connecting structure (122) is rotatably connected with the housing (132).

## Patentansprüche

1. Eine Anzeigevorrichtung (1), umfassend:
eine Anzeigeanordnung (11), die ein Anzeigepanel und eine erste Klemmstruktur (111) umfasst, die mit dem Anzeigepanel verbunden ist, wobei die erste Klemmstruktur (111) Zapfenstrukturen (112) und Befestigungsstrukturen (113) umfasst und die Zapfenstrukturen (112) zwischen den Befestigungsstrukturen (113) positioniert sind;
eine Übertragungsanordnung (12), die eine zweite Klemmstruktur (121) und eine Verbindungsstruktur (122) umfasst, wobei die zweite Klemmstruktur (121) mit der ersten Klemmstruktur (111) gekoppelt ist, die zweite Klemmstruktur (121) Klemmverbindungen (123) umfasst und die Klemmverbindungen (123) mit den Zapfenstrukturen (112) gekoppelt sind,
**dadurch gekennzeichnet, dass**:
ein Aufnahmeloch (115) an der ersten Klemmstruktur (111) definiert ist und die Anzeigeanordnung (11) eine erste Signalschnittstelle (116) umfasst, die in dem Aufnahmeloch (115) positioniert ist;
ein Durchgangsloch (126) an der zweiten Klemmstruktur (121) definiert ist, wobei das Durchgangsloch (126) lösbar ist und mit dem Aufnahmeloch (115) in Verbindung steht;
die Zapfenstrukturen (112) einen ersten Zapfen (1121), einen zweiten Zapfen (1122) und einen dritten Zapfen (1123) umfassen, der erste Zapfen (1121) ein symmetrisches Biegeteil (1124) umfasst, der zweite Zapfen (1122) und der dritte Zapfen (1123) um das Aufnahmeloch (115) herum angeordnet sind, der zweite Zapfen (1122) von einem Teil des symmetrischen Biegeteils (1124) beabstandet ist und der dritte Zapfen (1123) von einem anderen Teil des symmetrischen Biegeteils (1124) beabstandet ist;
die Klemmverbindungen (123) und die Zapfenstrukturen (112) versetzt angeordnet sind und die Klemmverbindungen (123) in Lücken zwischen dem ersten Zapfen (1121), dem zweiten Zapfen (1122) und dem dritten Zapfen (1123) eingeführt werden können; Befestigungsnuten (124) an der zweiten Klemmstruktur (121) definiert sind, Profile der Befestigungsnuten (124) an die Befestigungsstrukturen (113) angepasst sind und ein Ende der Verbindungsstruktur (122) fest mit der zweiten Klemmstruktur (121) verbunden ist.

2. Die Anzeigevorrichtung (1) nach Anspruch 1, wobei ein erstes Verbindungsloch (114) an der ersten Klemmstruktur (111) definiert ist, ein zweites Verbindungsloch (125) an der zweiten Klemmstruktur (121) definiert ist, das erste Verbindungsloch (114) lösbar ist und mit dem zweiten Verbindungsloch (125) in Verbindung steht, ein Verbindungselement (117) in dem ersten Verbindungsloch (114) und dem zweiten Verbindungsloch (125) positioniert ist und die erste Klemmstruktur (111) durch das Verbindungselement (117) an der zweiten Klemmstruktur (121) befestigt ist.

3. Die Anzeigevorrichtung (1) nach Anspruch 1, wobei die zweite Klemmstruktur (121) Seitenwände (127) umfasst, das Durchgangsloch (126) zwischen den Seitenwänden (127) ausgebildet ist und die Seitenwände (127) an den Zapfenstrukturen (112) anliegen, wenn das Durchgangsloch (126) mit dem Aufnahmeloch (115) in Verbindung steht.

4. Die Anzeigevorrichtung (1) nach Anspruch 3, wobei die Übertragungsanordnung (12) eine zweite Signalschnittstelle (128) umfasst, die zweite Signalschnittstelle (128) in dem Durchgangsloch (126) positioniert ist und die zweite Signalschnittstelle (128) mit der ersten Signalschnittstelle (116) verbunden ist.

5. Die Anzeigevorrichtung (1) nach Anspruch 1, wobei die Übertragungsanordnung (12) ein Lager (129) umfasst, das Lager (129) an einem von der zweiten Klemmstruktur (121) abgewandten Ende der Verbindungsstruktur (122) positioniert ist und das Lager drehbar mit der Verbindungsstruktur (122) verbunden ist.

6. Die Anzeigevorrichtung (1) nach Anspruch 1, wobei die Anzeigevorrichtung (1) eine Antriebsanordnung (13) umfasst, die Antriebsanordnung (13) ein Antriebselement (131) umfasst und eine Ausgangswelle des Antriebselements (13) mit der Verbindungsstruktur (122) verbunden ist.

7. Die Anzeigevorrichtung (1) nach Anspruch 6, wobei die Antriebsanordnung (13) ein Gehäuse (132) umfasst, ein Hohlraum (134) mit einer Öffnung (133) in dem Gehäuse (132) definiert ist, die Verbindungsstruktur (122) teilweise in dem Hohlraum (134) positioniert ist und sich die Verbindungsstruktur (122) aus der Öffnung (133) aus dem Hohlraum (134) heraus erstreckt, wobei die Verbindungsstruktur (122) drehbar mit dem Gehäuse (132) verbunden ist.

## Revendications

1. Un dispositif d'affichage (1) comprenant:
un ensemble d'affichage (11) comprenant un panneau d'affichage et une première structure de serrage (111) connectée au panneau d'affichage, dans lequel la première structure de serrage (111) comprend des structures de tenon (112) et des structures de fixation (113), les structures de tenon (112) étant positionnées entre les structures de fixation (113);
un ensemble de transmission (12) comprenant une deuxième structure de serrage (121) et une structure de connexion (122), dans lequel la deuxième structure de serrage (121) est couplée à la première structure de serrage (111), la deuxième structure de serrage (121) comprend des éléments de serrage (123), les éléments de serrage (123) étant couplés aux structures de tenon (112),
**caractérisé en ce que**:
un trou de réception (115) est défini sur la première structure de serrage (111), l'ensemble d'affichage (11) comprenant une première interface de signal (116) positionnée dans le trou de réception (115);
un trou traversant (126) est défini sur la deuxième structure de serrage (121), le trou traversant (126) étant détachable et communiquant avec le trou de réception (115);
les structures de tenon (112) comprennent un premier tenon (1121), un deuxième tenon (1122) et un troisième tenon (1123), le premier tenon (1121) comprend une partie courbée symétrique (1124), et le deuxième tenon (1122) et le troisième tenon (1123) sont situés autour du trou de réception (115), le deuxième tenon (1122) étant espacé d'une partie de la partie courbée symétrique (1124) et le troisième tenon (1123) étant espacé d'une autre partie de la partie courbée symétrique (1124); les éléments de serrage (123) et les structures de tenon (112) sont décalés, et les éléments de serrage (123) peuvent être insérés dans les espaces situés entre le premier tenon (1121), le deuxième tenon (1122) et le troisième tenon (1123); des rainures de fixation (124) sont définies sur la deuxième structure de serrage (121), les profils des rainures de fixation (124) correspondent aux structures de fixation (113), et une extrémité de la structure de connexion (122) est connectée de manière fixe à la deuxième structure de serrage (121).

2. Le dispositif d'affichage (1) selon la revendication 1, dans lequel un premier trou de connexion (114) est défini sur la première structure de serrage (111), un deuxième trou de connexion (125) est défini sur la deuxième structure de serrage (121), le premier trou de connexion (114) est détachable et communique avec le deuxième trou de connexion (125), un élément de connexion (117) est positionné dans le premier trou de connexion (114) et le deuxième trou de connexion (125), et la première structure de serrage (111) est fixée à la deuxième structure de serrage (121) par l'intermédiaire de l'élément de connexion (117).

3. Le dispositif d'affichage (1) selon la revendication 1, dans lequel la deuxième structure de serrage (121) comprend des parois latérales (127), le trou traversant (126) est formé entre les parois latérales (127), et les parois latérales (127) viennent en butée contre les structures de tenon (112) lorsque le trou traversant (126) communique avec le trou de réception (115).

4. Le dispositif d'affichage (1) selon la revendication 3, dans lequel l'ensemble de transmission (12) comprend une deuxième interface de signal (128), la deuxième interface de signal (128) est positionnée dans le trou traversant (126), et la deuxième interface de signal (128) est connectée à la première interface de signal (116).

5. Le dispositif d'affichage (1) selon la revendication 1, dans lequel l'ensemble de transmission (12) comprend un roulement (129), le roulement (129) est positionné à une extrémité de la structure de connexion (122) éloignée de la deuxième structure de serrage (121), et le roulement est connecté à rotation avec la structure de connexion (122).

6. Le dispositif d'affichage (1) selon la revendication 1, dans lequel le dispositif d'affichage (1) comprend un ensemble d'entraînement (13), l'ensemble d'entraînement (13) comprend un élément d'entraînement (131), et un arbre de sortie de l'élément d'entraînement (13) est connecté à la structure de connexion (122).

7. Le dispositif d'affichage (1) selon la revendication 6, dans lequel l'ensemble d'entraînement (13) comprend un boîtier (132), une cavité (134) avec une ouverture (133) définie dans le boîtier (132), la structure de connexion (122) est partiellement positionnée dans la cavité (134), et la structure de connexion (122) s'étend hors de la cavité (134) à partir de l'ouverture (133), la structure de connexion (122) étant connectée à rotation avec le boîtier (132).
